# EUROPÄISCHE PATENTSCHRIFT

(11) **EP 2 294 445 B1**
(45) Veröffentlichungstag und Bekanntmachung des Hinweises auf die Patenterteilung: **19.12.2018**
(21) Anmeldenummer: 09772023.9
(22) Anmeldetag: 02.07.2009
(51) Int. Cl.: G01S 7/03, H01Q 1/32

(54) **RADARSENSOR MIT FRONTALER UND SEITLICHER ABSTRAHLUNG**
RADAR SENSOR WITH FRONTAL AND LATERAL EMISSION
CAPTEUR RADAR À RAYONNEMENT FRONTAL ET LATÉRAL

(30) Priorität: 02.07.2008 DE 102008032070
(43) Veröffentlichungstag der Anmeldung: 16.03.2011
(73) Patentinhaber: ADC Automotive Distance Control Systems GmbH, 88131 Lindau (DE)
(72) Erfinder: WINTERMANTEL, Markus, 88131 Lindau (DE); MÖBIUS, Arnold, 88131 Lindau (DE); SCHWÖRER, Christoph, D-70327 Stuttgart (DE)
(86) Internationale Anmeldenummer: PCT/DE2009/000947
(87) Internationale Veröffentlichungsnummer: WO 2010/000253

(56) Entgegenhaltungen:
- WO-A1-2005/073753
- KR-A- 20070 099 195
- US-A- 5 008 678
- US-A- 5 940 011
- US-A1- 2006 092 076

## Beschreibung

Die Erfindung bezieht sich auf einen Radarsensor zum Einsatz für Fahrerassistenzsysteme im Kraftfahrzeug. Der Radarssensor besitzt erfindungsgemäß eine frontale und eine seitliche Abstrahlung und eignet sich insbesondere zur Realisierung eines Spurwechselassistenten.

### Stand der Technik

Kraftfahrzeuge werden zunehmend mit Fahrerassistenzsystemen ausgerüstet, welche mit Hilfe von Sensorsystemen die Umgebung erfassen und aus der so erkannten Verkehrssituation automatische Reaktionen des Fahrzeugs ableiten und/oder den Fahrer instruieren, insbesondere warnen. Dabei unterscheidet man zwischen Komfort- und Sicherheitsfunktionen.

Als Komfortfunktion spielt in der momentanen Entwicklung FSRA (Full Speed Range Adaptive Cruise Control) die wichtigste Rolle. Das Fahrzeug regelt die Eigengeschwindigkeit auf die vom Fahrer vorgegebene Wunschgeschwindigkeit ein, sofern die Verkehrssituation dies zulässt, andernfalls wird die Eigengeschwindigkeit automatisch an die Verkehrssituation angepasst. Als zweite wichtige Komfortfunktion etabliert sich gerade der Spurwechselassistent, welcher dem Fahrer anzeigt bzw. ihn bei gesetztem Blinker warnt, wenn sich auf der Nachbarfahrspur ein anderes Fahrzeug befindet, welches im Falle eines Spurwechsels beachtet werden muss, insbesondere um Unfälle und gefährliche Situationen, welche dieses andere Fahrzeug zu einem scharfen Bremsen oder einem unkontrollierten Fahrspurwechsel seinerseits zwingen würden, zu vermeiden.

Neben einer Erhöhung des Komforts stehen auch Sicherheitsfunktionen im Fokus, wobei die Reduzierung des Brems- bzw. Anhalteweges in Notsituationen die wichtigste Rolle spielt. Das Spektrum der entsprechenden Fahrerassistenzfunktionen reicht von einem automatischen Vorfüllen der Bremse zur Reduktion der Bremslatenz (Prefill), über einen verbesserten Bremsassistenten (BAS+) bis hin zur autonomen Notbremsung.

Für Fahrerassistenzsysteme der oben beschriebenen Art werden heute vorwiegend Radarsensoren eingesetzt. Diese arbeiten auch bei schlechten Wetterbedingungen zuverlässig und können neben dem Abstand von Objekten auch direkt deren radiale Relativgeschwindigkeit über den Dopplereffekt messen. Als Sendefrequenzen werden dabei 24 und 77GHz eingesetzt.

Heute verfügbare Radarsensoren haben nur einen frontalen Erfassungsbereich von maximal etwa -75...+75°. Zur Realisierung von hochperformanten Spurwechselassistenten ist es aber nötig, dass sich der Erfassungsbereich weiter zur Seite öffnet, so dass man quasi um die Ecke schauen kann; dies ist insbesondere für Situationen wichtig, in welchen das eigene Fahrzeug langsam ein anderes, insbesondere kleineres Fahrzeug überholt und sich dieses im Totwinkelbereich der Seitenspiegel befindet. Um einen solchen seitlich erweiterten Erfassungsbereich zu realisieren, ist nach dem Stand der Technik ein zweiter Sensor mit anderer Einbauorientierung oder eine zusätzliche, anders orientierte Hochfrequenzplatinebekannt. Beide Lösungen erhöhen signifikant die Systemkosten. Die Schrift US 5940011 gibt eine alternative Vorrichtung mit einem erweiterten Erfassungsbereich an. Dazu sind zwei unterschiedliche Antennentypen auf einer Platine angeordnet, nämlich eine Patchantenne und eine Schlitzantenne am Platinenrand, die in Längsrichtung emittiert. Die Schrift US2006/0092076 A1 offenbart eine Antenne auf einem Substrat, wobei der Antennenstrahl durch einen seitlich von der Antenne angeordneten Parabolspiegel in eine horizontale abgelenkt wird.

### Aufgabe, Lösung und Vorteile der Erfindung

Aufgabe der Erfindung ist es, einen günstigen Sensor mit frontalem und seitlichem Erfassungsbereich zu generieren.

Diese Aufgabe wird grundsätzlich mit Hilfe eines Radarsystems gemäß den Ansprüchen 1-14 gelöst. Dabei wird dargestellt, wie man mit Elementarstrahlern auf einer ebenen Platine eine seitliche Abstrahlung realisieren kann, wozu direkt seitlich strahlende am Platinenrand angeordnete Elementarstrahler und bzw. oder Strahlumlenkungen an spiegelnden Flächen oder mit entsprechend geformten dielektrischen Materialen von frontal strahlenden Elementarstrahlern benutzt werden.

Die Vorteile der Erfindung ergeben sich aus der Tatsache, dass ein Sensor mit frontalem und seitlichem Erfassungsbereich günstig realisiert werden kann, welcher sich insbesondere für die Implementierung eines Spurwechselassistenten eignet, aber auch bei anderen Funktionen zu einer signifikanten Reduktion der Systemkosten führen kann, da sich die Zahl der im Fahrzeug benötigten Sensoren reduzieren lässt, wenn der erfindungsgemäße Sensor im Bereich der Fahrzeugecken eingebaut wird. Eine reduzierte Zahl an benötigten Sensoren hat selbstverständlich noch weitere Vorteile wie beispielsweise Reduktion des benötigten Bauraums und reduziertes Fahrzeuggewicht.

### Kurzbeschreibung der Zeichnungen

In Fig. 1 ist in der Mitte ein horizontaler Schnitt durch die erste Ausführungsform eines Radarsensors dargestellt, oben und unten die Vorder- bzw. Rückseite der Hochfrequenzplatine dieses Sensors.
Fig. 2 zeigt in Ansicht von oben die beiden Erfassungsbereiche des Radarsensors.
Fig. 3 zeigt in Ansicht von oben die Einbaulage im Fahrzeug und den Erfassungsbereich der zwei Radarsensoren zur Implementierung eines Spurwechselassistenten.
In Fig. 4 sind die Zweiwege-Antennendiagramme für die frontal und die seitlich schauenden Antennen über dem Azimutwinkel dargestellt.
In Fig. 5 ist in der Mitte ein horizontaler Schnitt durch die zweite Ausführungsform eines Radarsensors dargestellt, oben und unten die Vorder- bzw. Rückseite der Hochfrequenzplatine dieses Sensors.
In Fig. 6 ist in der Mitte ein horizontaler Schnitt durch die dritte Ausführungsform eines Radarsensors dargestellt, oben und unten die Vorder- bzw. Rückseite der Hochfrequenzplatine dieses Sensors.
In Fig. 7 ist in der Mitte ein horizontaler Schnitt durch die vierte Ausführungsform eines Radarsensors dargestellt, oben und unten die Vorder- bzw. Rückseite der Hochfrequenzplatine dieses Sensors.
Fig. 8 zeigt für die Anordnung nach Fig. 7 die unterschiedlichen Weglängen zwischen den Phasenzentren der seitlich schauenden Empfangsantennen und einem weit entfernten punktförmigen Objekt beim auf die Platinenebene bezogenen Azimutwinkel *α*_{Az}.

### Ausführungsbeispiele

Die Erfindung wird nun anhand beispielhafter Ausführungen von Radarsensoren und Realisierungen ihrer Antennen erläutert.

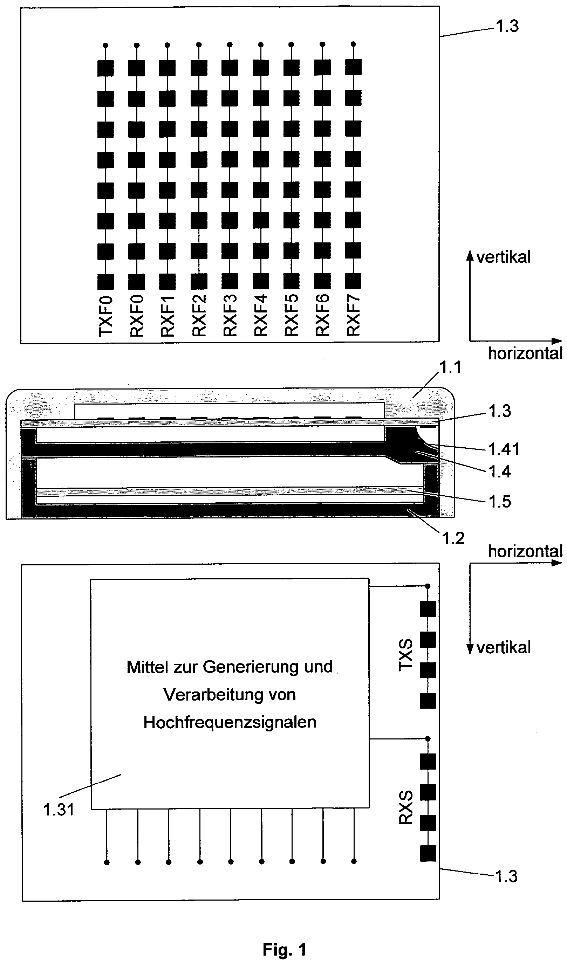

In Fig. 1 ist in der Mitte ein horizontaler Schnitt durch einen Radarsensor dargestellt. Vorne und seitlich wird der Sensor von einem Kunststoffgehäuse 1.1 umschlossen, welches die Radarwellen möglichst ungehindert und unbeeinflusst durchlässt. Auf der Rückseite weist der Sensor einen Deckel 1.2 auf. Dazwischen befinden sich von vorne gesehen eine Platine 1.3, welche die hochfrequenten, also bei der Radarfrequenz (z. B. im 24GHz-Bereich) arbeitenden Komponenten beinhaltet, dann der aus Metall oder metallisiertem Kunststoff bestehende Innenträger 1.4, welcher als konstruktiv tragendes Teil und zur Schirmung der Platinen dient, und zum Schluss die Platine 1.5 für die niederfrequenten Komponenten, insbesondere für die digitale Signalauswertung.

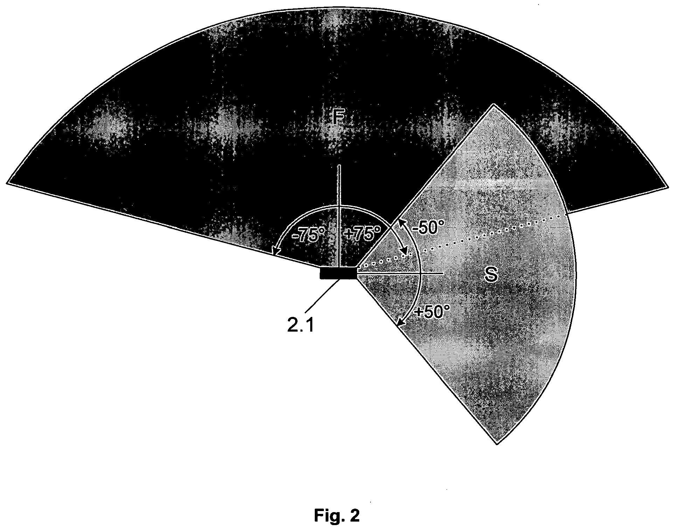

Auf der in Fig. 1 oben dargestellten Vorderseite der Hochfrequenzplatine 1.3 und auf ihrer Rückseite (sieh Fig. 1 unten) befinden sich Sendeantennen zur Abstrahlung von Sendesignalen und Empfangsantennen zum Empfang von an Objekten reflektierten Sendesignalen. Sende- und Empfangsantennen sind in gedruckter Struktur als Patchantennen ausgebildet. Die Sendeantenne TXF0 und die Empfangsantennen RXF0-7 auf der Platinenvorderseite dienen der Erfassung des Bereichs vor dem Sensor; Fig. 2 zeigt in Ansicht von oben diesen dort mit F bezeichneten frontalen Erfassungsbereich des Sensors 2.1. Jedes einzelne rechteckförmige Patch stellt ein sendendes bzw. empfangendes Einzelelement, im Folgenden auch als Elementarstrahler bezeichnet, dar und hat einen sehr breiten Strahlkegel, dessen Zentrum senkrecht zur Platine steht. Da diese Antennen auf der Platinenvorderseite nur aus einer senkrechten Patchspalte bestehen (also 8 übereinander angeordneten Patches), ist ihr Strahlkegel in Azimut (also in der Horizontalen) gleich breit wie der Strahlkegel jedes einzelnen Patches und liegt im Bereich -75°...75° zur Senkrechten auf der Platine. In Elevation (also in der Vertikalen) ergibt sich durch die 8 übereinander angeordneten Patches ein engerer Erfassungsbereich von etwa -10...+10° zur Senkrechten auf der Platine. Dadurch, dass es 8 in horizontaler Richtung äquidistante Empfangsantennen gibt, kann man in den Signalverarbeitungsmitteln eine digitale Strahlformung mit Hilfe einer diskreten Fouriertransformation (DFT) durchführen, und damit im Erfassungsbereich F vor dem Sensor die azimutalen Winkel von Objekten genau bestimmen und Objekte bei unterschiedlichen Azimutwinkeln über diesen allein trennen.

Neben Mitteln 1.31 zur Generierung und Verarbeitung von Hochfrequenzsignalen befinden sich auf der Platinenrückseite (siehe Fig. 1 unten) die jeweils 4 übereinander angeordneten Patches der Sendeantenne TXS und der Empfangsantenne RXS. Die Abstrahlung dieser Patches wird über die metallische oder metallisierte Fläche 1.41 am Innenträger 1.4 zur Seite hin umgelenkt, so dass die Antennen TXS und RXS den in Fig. 2 dargestellten seitlichen Erfassungsbereich S generieren, welcher bezüglich der Platinenebene einen azimutalen Erfassungsbereich von ungefähr -50°...+50° hat. Allein mit den in RXS zu einem Zeitpunkt empfangenen Signalen kann nur eine Aussage getroffen werden, ob sich in diesem Erfassungsbereich Objekte befinden, man kann aber nicht ihren Azimutwinkel bestimmen und sie über den Azimutwinkel allein trennen. Eine Trennung ist nur über andere gemessene Größen wie beispielsweise Entfernung und radiale Relativgeschwindigkeit und bzw. oder über den zeitlichen Verlauf von Messgrößen unter Annahmen bestimmter Objekthypothesen möglich; letzteres kann auch zur Winkelbestimmung benutzt werden und wird weiter unten erläutert.

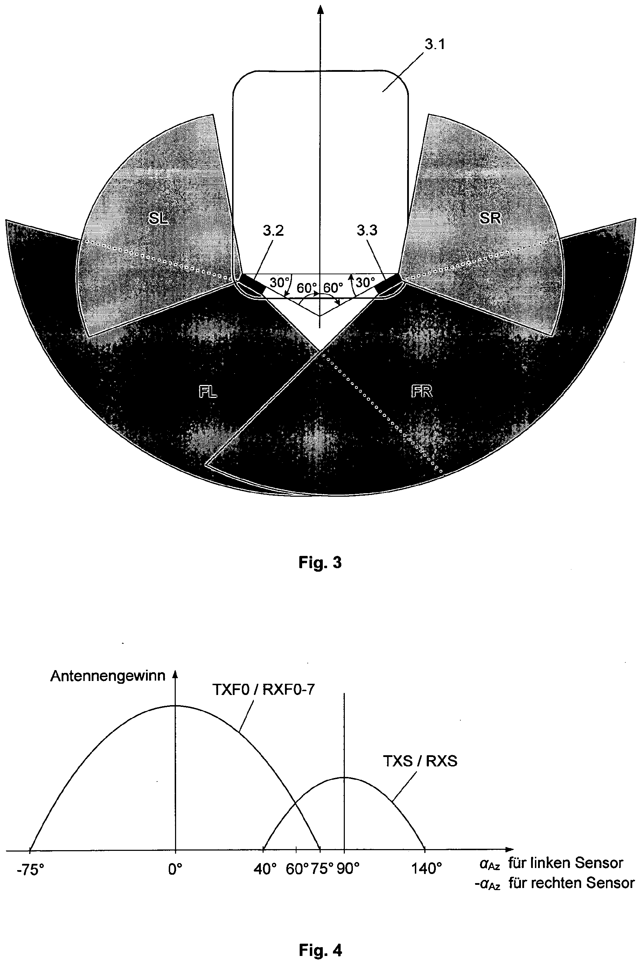

Solche Radarsensoren werden beispielsweise zur Implementierung eines Spurwechselassistenten benutzt, welcher dem Fahrer anzeigt bzw. ihn bei gesetztem Blinker warnt, wenn sich auf der Nachbarfahrspur ein anderes Fahrzeug befindet, welches im Falle eines Spurwechsels beachtet werden muss, insbesondere um Unfälle und gefährliche Situation, welche dieses andere Fahrzeug zu einem scharfen Bremsen oder einem unkontrollierten Fahrspurwechsel seinerseits zwingen würden, zu vermeiden. Für eine solche Fahrerassistenzfunktion werden - wie in Fig. 3 von oben gesehen dargestellt - hinten links und rechts am Fahrzeug 3.1 (typischerweise hinter dem Kunststoffstoßfänger) zwei der oben vorgestellten Radarsensoren 3.2 und 3.3 nach Fig. 1 eingebaut; dabei ist der Einbauwinkel vom Betrag her um 60° gegenüber der Längsrichtung des Fahrzeugs gekippt (also um 30° zum Heck). In Fig. 3 sind die Erfassungsbereiche der beiden Sensoren dargestellt. Die beiden bzgl. des jeweiligen Sensors frontalen Erfassungsbereiche FL und FR dienen zur Detektion von Fahrzeugen, welche sich hinter dem eigenen Fahrzeug oder auf Höhe des Fahrzeughecks befinden. In diesem Erfassungsbereich kann der Azimutwinkel von Objekten mit Hilfe einer digitalen Strahlformung durch eine DFT über die Empfangssignale der 8 Empfangsantennen RXF0-7 so genau bestimmt werden, dass auch noch in etwa 80m Entfernung Fahrzeuge richtig zu den Fahrspuren zugeordnet werden können; detektiert man in dieser Entfernung ein Fahrzeug, welches sich mit hoher Relativgeschwindigkeit annähert, so ist es für den Spurwechselassistenten nur dann relevant, wenn es sich auf der benachbarten Fahrspur befindet (und nicht z. B. auf einer dreispurigen Fahrbahn zwei Fahrspuren neben der eigenen).

Allerdings decken die Erfassungsbereiche FL und FR nicht den kompletten Raum neben dem Fahrzeug ab, insbesondere nicht den mittleren und vorderen Bereich; dies ist insbesondere in solchen Situationen kritisch, wo das eigene Fahrzeug langsam ein anderes, insbesondere kleineres Fahrzeug überholt und sich dieses im Totwinkelbereich der Seitenspiegel befindet. Dafür werden die bzgl. des jeweiligen Sensors seitlichen Erfassungsbereiche SL und SR benötigt. Ohne die erfindungsgemäße Realisierung dieser seitlichen Erfassungsbereiche durch Umlenkung der Strahlrichtung von auf der Hochfrequenzplatine angeordneten Elementarstrahlern wäre dazu entweder jeweils ein zweiter Sensor mit anderer Einbauorientierung oder zumindest eine zusätzliche, anders orientierte Hochfrequenzplatine nötig, was signifikant die Systemkosten erhöhen würde.

Die Winkelmessgenauigkeit in den beiden bzgl. des jeweiligen Sensors frontalen Erfassungsbereiche FL und FR nimmt nach außen hin ab (also mit betragsmäßig steigendem Winkel gegenüber der Senkrechten auf dem Sensor); dies liegt primär an der nichtlinearen, nach außen hin immer flacher werdenden Abbildung zwischen Azimutwinkel und Phasenunterschied der Empfangssignale benachbarter Empfangsantennen RXF0-7, dazu kommt noch das nach außen hin abnehmende Signal-Rausch-Verhältnis durch geringeren Antennengewinn. Deshalb wird jeweils im äußeren zur Fahrzeugseite zeigenden Bereich von FL und FR noch zusätzlich eine Winkelschätzung durch Amplitudenvergleich mit dem im jeweiligen seitlichen Erfassungsbereich SL bzw. SR empfangenen Pegel der Antenne RXS gemacht. In Fig. 4 sind über dem Azimutwinkel die Zweiwege-Antennendiagramme (also für Senden und Empfangen) für die frontalen Antennen (TXF0 / RXF0-7) und die seitlichen Antennen (TXS / RXS) dargestellt; die zusätzliche Winkelschätzung durch Amplitudenvergleich wird etwa im auf den Sensor bezogenen Azimutwinkelbereich 60°...75° (für linken Sensor) bzw. -60°...-75° (für rechten Sensor) durchgeführt, wo der Pegel der frontalen Antennen stark abfällt, während der Pegel der seitlichen Antennen zunimmt, so dass sich eine starke Änderung des Pegelverhältnisses ergibt. Für den Pegel der frontalen Antennen benutzt man zweckmäßigerweise den sich nach der digitalen Strahlformung ergebenden Pegel und nicht die Einzelpegel der Empfangsantennen - letzteres könnte in Mehrobjektsituationen zu Fehlern führen. Neben einem Amplitudenvergleich könnte man auch noch die Phasenbeziehungen von Empfangssignalen aus frontalen und seitlichen Empfangsantennen auswerten, wobei dann der horizontale Abstand der Phasenzentren dieser Antennen zu berücksichtigen ist.

Durch die bisher beschriebenen Maßnahmen kann man den Azimutwinkel von Objekten bis jeweils 15° seitlich nach vorne schätzen. Im weiter nach vorne zeigenden Teil der Erfassungsbereiche SL und SR (also außerhalb der Bereiche FL und FR) kann aus den zu einem Zeitpunkt empfangenen Signalen keine generelle Azimutwinkelschätzung durchgeführt werden; erst unter Annahme bestimmter Objekthypothesen ist dies aus den Werten und bzw. oder den zeitlichen Verläufen von Messgrößen möglich, was nun an einigen Beispielen erläutert werden soll:
- Kommt ein sich parallel zum eigenen Fahrzeug bewegendes Objekt von vorne in den seitlichen Erfassungsbereich SL oder SR, so nimmt der Azimutwinkel bzgl. dem Sensor vom Betrag her ab und damit der zugehörige Zweiwege-Antennengewinn zunächst zu, bevor er nach Überschreiten des Maximums wieder zurückgeht (siehe Fig. 4). Geht man von dieser Hypothese sowie einer etwa konstanten Reflektivität (also einem konstanten Reflektionsquerschnitt) aus und berücksichtigt noch den Einfluss einer sich gegebenenfalls ändernden Objektentfernung (welche direkt gemessen wird), so kann man durch Vergleich des gemessenen Pegels mit dem bekannten Verlauf des Antennengewinns über den Azimutwinkel auf diesen grob schließen.
- Die zum Sensor radiale Relativgeschwindigkeit eines stationären Objekts ist abhängig vom Azimutwinkel und der Eigengeschwindigkeit des Fahrzeugs. Da letzteres bekannt ist, kann man aus der vom Sensor gemessenen radialen Relativgeschwindigkeit unter der Hypothese, dass sie zu einem stationären Objekt gehört, auf dessen Azimutwinkel schließen. Prinzipiell kann man für eine Hypothese stationärer Objekte verschiedenste SAR-Methoden (SAR = Syntetic Aperture Radar) zur Bestimmung von deren Azimutwinkel anwenden.
- Die vom Sensor gemessene radiale Relativgeschwindigkeit eines sich parallel zum eigenen Fahrzeug mit konstanter Absolutgeschwindigkeit bewegenden Fahrzeugs ist abhängig von dessen Azimutwinkel und der Differenz zwischen Eigengeschwindigkeit und Absolutgeschwindigkeit dieses Fahrzeugs. Da es mit dem Azimutwinkel und der Absolutgeschwindigkeit des anderen Fahrzeuges zwei Unbekannte gibt, muss man für eine solche Hypothese den Verlauf der gemessenen radialen Relativgeschwindigkeit über einen gewissen Zeitraum auswerten.

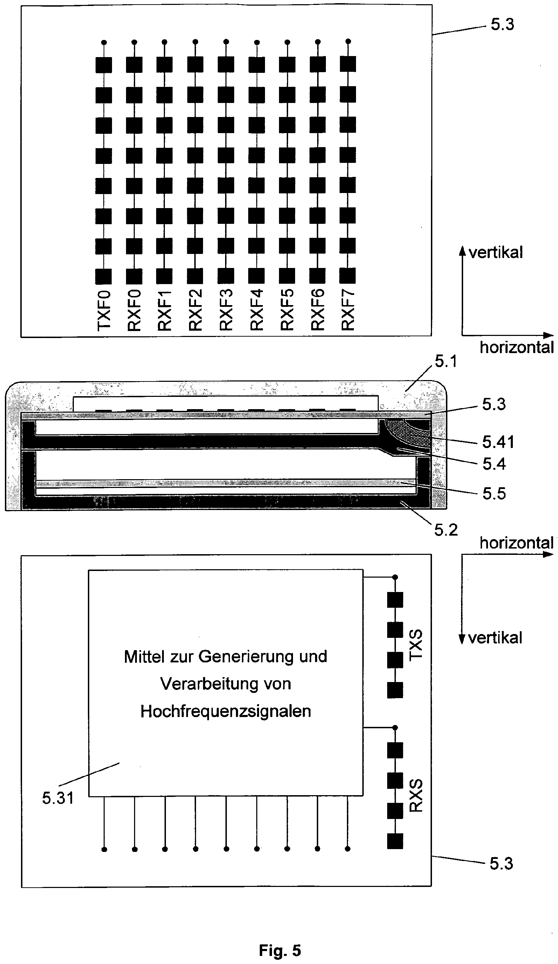

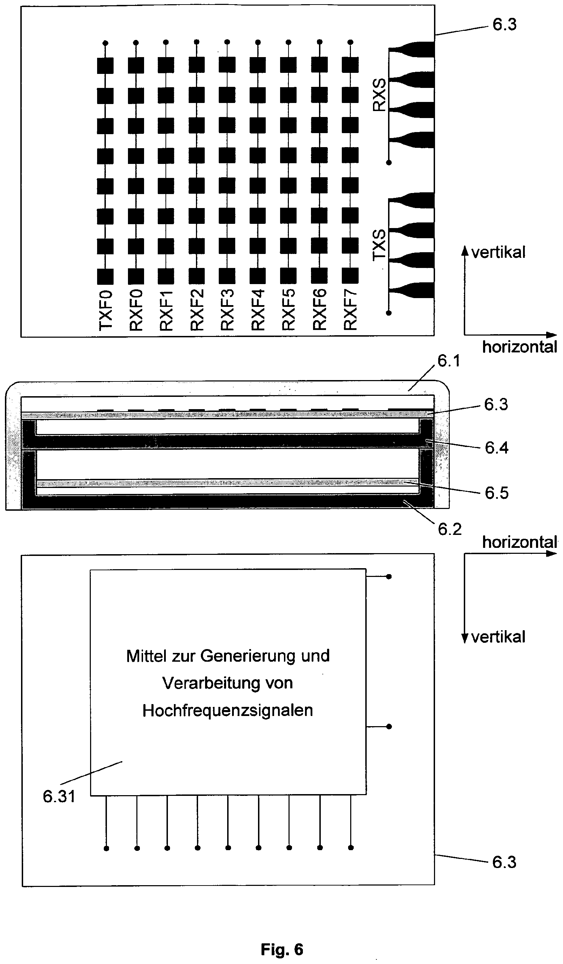

Zur Realisierung einer seitlichen Abstrahlung von auf der Hochfrequenzplatine angeordneten Elementarstrahlern wurde bisher eine Umlenkung an einer entsprechend geformten metallischen Oberflächen benutzt. Alternativ gibt es dazu aber auch noch andere Möglichkeiten; exemplarisch seien nun folgende näher ausgeführt:
- Der Strahlengang von auf der Hochfrequenzplatine angeordneten Elementarstrahlern wird mit Hilfe von Hohlleiterstrukturen zur Seite umgelenkt. Fig. 5 zeigt dazu einen horizontalen Schnitt durch den Radarsensor mit den im Innenträger 5.4 realisierten Hohlleitern 5.41; die Hochfrequenzplatine (Vorderseite oben in Fig. 5 dargestellt, Unterseite unten) ändert sich gegenüber der ursprünglichen Ausführung nach Fig. 1 nur durch eine leicht eingerückte Position der Patches für die zur Seite umgelenkten Antennen TXS und RXS.
- Der Strahlengang von auf der Hochfrequenzplatine angeordneten Elementarstrahlern wird mit Hilfe entsprechend geformter Strukturen aus dielektrischem Material zur Seite umgelenkt, wobei diese Strukturen aus dielektrischem Material vorzugsweise über den Elementarstrahlern angeordnet und Teil eines Kunststoffgehäuseteils sind. Diese Methode kann auch in Kombination mit der Umlenkung durch spiegelnde Flächen oder Hohlleiterstrukturen kombiniert werden.
- Es werden Elementarstrahler in gedruckter Struktur verwendet, deren Strahlkegelzentrum auch ohne Zusatzmaßnahmen schon seitlich zur Platine steht. Dazu kann man beispielsweise am Rand der Platine endende, geeignet geformte Stichleitungen benutzen, welche als Schlitzstrahler wirken. Fig. 6 oben zeigt die Vorderseite der Hochfrequenzplatine 6.3 einer solchen Anordnung mit Stichleitungen zum Rand, welche die seitlich abstrahlenden Antennen TXS und RXS realisieren. Dadurch sind zum einen keine Umlenkungsmaßnahmen erforderlich (siehe Schnitt durch Anordnung nach Fig. 6 Mitte) und zum anderen keine Patches auf der Platinenrückseite, welche in Fig. 6 unten dargestellt ist.

Die bisher betrachteten Anordnungen haben im seitlichen Erfassungsbereich allein keine Möglichkeit, aus den zu einem Zeitpunkt empfangenen Signalen den Azimutwinkel zu bestimmen, da es nur eine Sende- und eine Empfangsantenne gibt. Um diesen Nachteil zu überwinden, sind mehrere seitlich gerichtete Sende- und bzw. oder mehrere seitlich gerichtete Empfangsantennen nötig, deren Phasenzentren jeweils in zur Platine senkrechter Richtung gesehen gegeneinander versetzt sind; die Azimutwinkelschätzung kann dann aus den Phasenlagen der Empfangssignale von unterschiedlichen Kombinationen aus Sende- und Empfangsantennen erfolgen, wenn für diese Kombinationen mehrere solcher Sende- und bzw. oder mehrere solcher Empfangsantennen mit versetzten Phasenzentren benutzt werden.

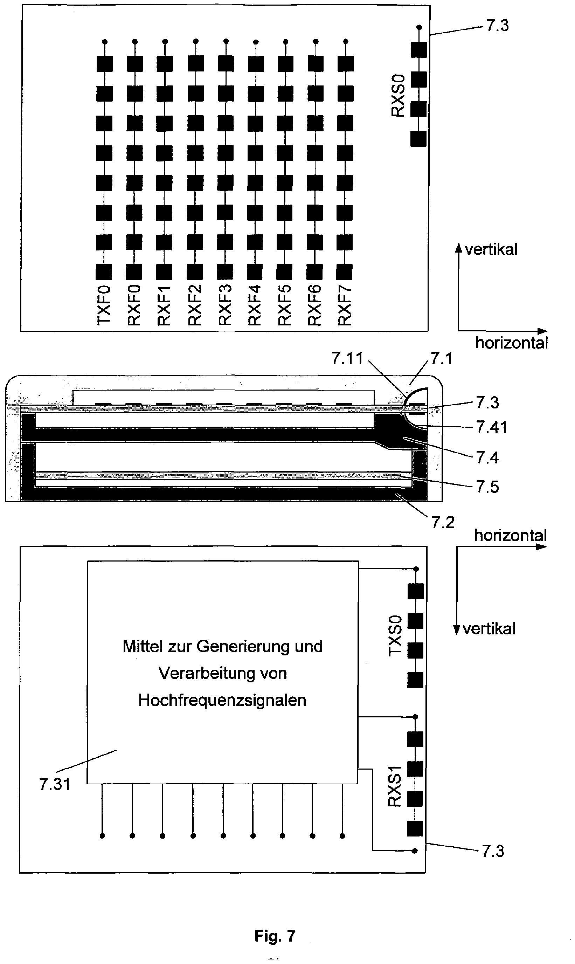

Dies soll nun am in Fig. 7 dargestellten Beispiel erläutert werden. Auf der in Fig. 7 oben dargestellten Vorderseite der Hochfrequenzplatine 7.3 gibt es am Rand Patches für eine seitlich abstrahlende Empfangsantenne RXS0 und auf ihrer in Fig. 7 dargestellten Unterseite Patches für die seitlich abstrahlende Sendeantenne TXS0 und eine zweite seitlich abstrahlende Empfangsantenne RXS1. Zur seitlichen Umlenkung der Abstrahlung dieser Patches.werden wieder spiegelnde Oberflächen benutzt; wie im Schnitt durch die Anordnung nach Fig. 7 Mitte dargestellt, wird diese spiegelnde Fläche für die Antennen TXS0 und RXS1 der Platinenunterseite wieder als Teil 7.41 des aus Metall oder metallisiertem Kunststoff bestehenden Innenträgers 7.4 realisiert und für die Antenne RXS0 der Platinenoberseite durch eine über den Patches entsprechend gestaltete, lokal metallisierte Form 7.11 des Kunststoffgehäuses 7.1.

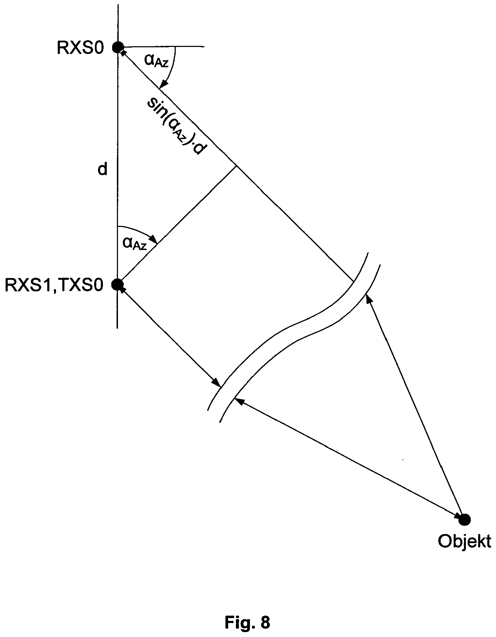

Die Phasenzentren der beiden Empfangsantennen RXS0 und RXS1 sind dadurch in zur Platine senkrechter Richtung gegeneinander um eine Maß d versetzt; in Fig. 8 sind die Phasenzentren der Antennen in vertikaler Projektion dargestellt. Des Weiteren zeigt Fig. 8 die Strahlengänge zu einem weit entfernten punktförmigen Objekt bei dem auf die Platinenebene bezogenen Azimutwinkel *α*_{Az} (das Objekt ist so weit entfernt, dass die Strahlengänge als parallel angenommen werden können, d. h., das Objekt befindet sich im Fernfeld der Antennenanordnung). Die Strahllänge vom Objekt zur Empfangsantenne RXS0 ist um den Wert Δr = sin(*α*_{Az})·d größer als zur Empfangsantenne RXS1. Die Phase des Empfangssignals von RXS1 eilt deshalb der Phase des Empfangssignals von RXS0 um Δϕ = 2*π*/*λ*·sin(*α*_{Az})·d voraus, wobei *λ* die Wellenlänge der verwendeten Radarfrequenz ist (bei 24GHz ist die Wellenlänge etwa 12.5mm). Somit kann man aus einer gemessenen Phasendifferenz Δϕ zwischen den Empfangssignalen der beiden Empfangsantennen RXS0 und RXS1 den Azimutwinkel *α*_{Az} = arcsin(Δϕ·*λ*/(2*π*·d)) des zugehörigen Objekts bestimmen. Allerdings ist dabei zu berücksichtigen, dass Phasen und damit auch Phasendifferenzen nur bis auf ein unbekanntes ganzzahliges Vielfaches von 2*π* gemessen werden können, so dass nur dann in der Azimutwinkelbestimmung keine Mehrdeutigkeiten entstehen, wenn die Phasendifferenz über den gesamten Erfassungsbereich kleiner als 2*π* ist; für den hier angenommenen Erfassungsbereich von -50°...+50° zur Platinenebene ergibt sich daraus die Forderung, dass d < *π·λ*/(2*π·*sin(50°)) = 0.65·*λ* sein muss.

In der betrachteten Anordnung nach Fig. 7 wird der Versatz der Phasenzentren von zwei seitlich schauenden Antennen bezüglich zur Platine senkrechter Richtung dadurch realisiert, dass die Abstrahlung von sich unten und oben auf der Platine befindlichen Patches an spiegelnden Flächen zur Seite umgelenkt wird. Ein solcher Versatz der Phasenzentren zweier Antennen kann aber auch durch andere Maßnahmen realisiert werden; als Beispiele seien genannt:
- auf der Platinenvorderseite gibt es am Rand Schlitzstrahler, auf der Rückseite Patches mit Strahlumlenkung an spiegelnden Flächen,
- auf der Platinenvorderseite gibt es sowohl am Rand befindliche Schlitzstrahler, als auch Patches mit Strahlumlenkung an spiegelnden Flächen, deren Phasenzentrum über der Platine liegt,
- auf der Platinenrückseite gibt es Patches, deren Strahlumlenkung mit Hilfe von Hohlleitern oder unterschiedlichen spiegelnden Flächen so ausgestaltet ist, dass sich zwei unterschiedliche Phasenzentren in zur Platine senkrechter Richtung ergeben.

Es sei bemerkt, dass man grundsätzlich zum einen auch mehr als zwei unterschiedliche Ebenen für die Phasenzentren in zur Platine senkrechter Richtung realisieren kann und zum anderen gleichzeitig mehrere Sende- und mehrere Empfangsantennen mit jeweils in dieser Richtung versetzen Phasenzentren möglich sind. Dadurch lassen sich die Azimutwinkel von Objekten genauer bestimmen und mehrere Objekte allein über den Azimutwinkel trennen.

Bei den bisherigen Anordnungen wird jede Antenne nur zum Senden oder Empfangen benutzt. Mit Hilfe von geeigneten Hochfrequenzkomponenten (z. B. gedruckten Ringkopplern) kann man aber auch eine Antenne sowohl zum Senden als auch Empfangen verwenden; realisiert man so eine zur Seite schauende gemeinsame Sende- und Empfangsantenne, so kann man diese bei vorgegebenem Bauraum doppelt so hoch wie in den bisher dargestellten Anordnungen machen, was zu einer höheren Strahlbündelung in Elevationsrichtung führt.

## Patentansprüche

1. Radarsensor zur Umfelderfassung eines Kraftfahrzeugs mit
- Sendemitteln zur Abstrahlung von Sendesignalen mit mehreren Sendeantennen,
- Empfangsmitteln zum Empfang von an Objekten reflektierten Sendesignalen mit mehreren Empfangsantennen und
- Signalverarbeitungsmitteln zur Prozessierung der empfangenen Signale,
- wobei es mehrere Sende- und mehrere Empfangsantennen gibt, welche jeweils wenigstens ein auf der Vorder- oder Rückseite einer ebenen Platine (1.3) angeordnetes sendendes bzw. empfangendes Einzelelement, im Folgenden als Elementarstrahler bezeichnet, beinhalten,
- es wenigstens eine Sende- und eine Empfangsantenne gibt, welche jeweils wenigstens einen auf der ebenen Platine (1.3) angeordneten Elementarstrahler beinhalten, dessen Strahlkegelzentrum außerhalb des Radarsensors mit höchstens 45° zur Senkrechten auf der Platine (1.3) gekippt ist,
- es wenigstens eine Sende- und eine Empfangsantenne gibt, welche jeweils wenigstens einen auf der ebenen Platine (1.3) angeordneten Elementarstrahler beinhalten, dessen Strahlkegelzentrum außerhalb des Radarsensors mit mehr als 45° zur Senkrechten auf der Platine (1.3) gekippt ist **dadurch gekennzeichnet, dass** eine Kippung des Strahlkegelzentrums von einem oder mehreren Elementarstrahlern außerhalb des Radarsensors um mehr als 45° zur Senkrechten auf der Platine dadurch realisiert wird, dass Elementarstrahler in gedruckter Struktur verwendet werden, deren Strahlkegelzentrum ohne zusätzliche Mittel zumindest näherungsweise senkrecht zur Platine (1.3) steht und welche deshalb im Folgenden als frontale Elementarstrahler bezeichnet werden, und zur Kippung des Strahlkegelzentrums dieser vorzugsweise nahe am Rand der Platine (1.3) angeordneten frontalen Elementarstrahler und somit zur Realisierung von seitlich strahlenden Elementarstrahlern wenigstens eine der nachfolgenden Maßnahmen verwendet wird:
- Umlenkung des Strahlengangs der Elementarstrahler mit spiegelnden, insbesondere metallischen oder metallisierten ebenen oder gewölbten Flächen, über den Elementarstrahlern, wobei die Flächen als Teil eines Innenträgers (1.4) oder eines Gehäuses (1.1) ausgestaltet sind
- Umlenkung des Strahlengangs der Elementarstrahler mit Hohlleiterstrukturen,
- Umlenkung des Strahlengangs der Elementarstrahler mit geeignet geformten Strukturen aus dielektrischem Material, insbesondere über den Elementarstrahlern und wobei das dielektrische Material Teil eines Kunststoffgehäuses (1.1) ist.

2. Radarsensor nach Anspruch 1 mit wenigstens einem Elementarstrahler, dessen Strahlkegelzentrum außerhalb des Radarsensors zumindest näherungsweise parallel oder näherungsweise senkrecht zur Platine liegt.

3. Radarsensor nach einem der obigen Ansprüche, bei welchem die Elementarstrahler als gedruckte Struktur, insbesondere als Patches ausgebildet sind.

4. Radarsensor nach einem der obigen Ansprüche, bei welchem wenigstens eine Antenne sowohl zum Senden, als auch zum Empfangen genutzt wird.

5. Radarsensor nach einem der obigen Ansprüche, bei welchem zusätzlich auch eine Kippung des Strahlkegelzentrums von einem oder mehreren Elementarstrahlern außerhalb des Radarsensors um mehr als 45°, insbesondere zumindest näherungsweise 90° zur Senkrechten auf der Platine dadurch realisiert wird, dass Elementarstrahler in gedruckter Struktur verwendet werden, deren Strahlkegelzentrum ohne zusätzliche Mittel seitlich zur Platine steht und welche im Folgenden als seitliche Elementarstrahler bezeichnet werden, wobei diese seitlichen Elementarstrahler vorzugsweise am Rand der Platine angeordnet und vorzugsweise als Schlitzstrahler realisiert sind.

6. Radarsensor nach einem der obigen Ansprüche, bei welchem es wenigstens zwei Sendeantennen und bzw. oder zwei Empfangsantennen gibt, deren Strahlkegelzentren außerhalb des Sensors um mehr als 45° zur Senkrechten auf der Platine gekippt sind und deren Phasenzentren in zur Platine senkrechter Richtung gesehen jeweils gegeneinander versetzt sind, wobei in den Signalverarbeitungsmitteln mit Hilfe der Phasenlagen der Empfangssignale von unterschiedlichen Kombinationen aus Sende- und Empfangsantennen, für welche wenigstens zwei solcher Sende- und bzw. oder zwei solcher Empfangsantennen mit versetzten Phasenzentren benutzt werden, die Winkellage von Objekten in zur Platine senkrechter Richtung geschätzt wird.

7. Radarsensor nach Anspruch 6, bei welchem der Versatz der Phasenzentren in zur Platine senkrechter Richtung durch wenigstens eine der nachfolgenden Maßnahmen realisiert wird:
- auf beiden Platinenseiten gibt es zumindest einen umgelenkten frontalen Elementarstrahler nach Anspruch 1 oder seitlichen Elementarstrahler nach Anspruch 5,
- es gibt auf einer Platinenseite, insbesondere der Vorderseite, zumindest einen seitlichen Elementarstrahler nach Anspruch 5 und auf der anderen Platinenseite zumindest einen umgelenkten frontalen Elementarstrahler,
- auf nur einer Platinenseite gibt es sowohl zumindest einen seitlichen Elementarstrahler nach Anspruch 5, als auch zumindest einen umgelenkten frontalen Elementarstrahler, dessen Phasenzentrum über bzw. unter der Platine liegt,
- auf nur einer Platinenseite, insbesondere der Rückseite, gibt es zumindest einen umgelenkten frontalen Elementarstrahler, wobei die Umlenkung beispielsweise mit Hilfe von Hohlleitern oder unterschiedlichen spiegelnden Flächen so ausgestaltet ist, dass sich unterschiedliche Phasenzentren in zur Platine senkrechter Richtung ergeben.

8. Radarsensor nach einem der obigen Ansprüche, insbesondere bei welchem es nur eine Sende- und eine Empfangsantenne gibt, deren Strahlkegelzentrum außerhalb des Sensors um mehr als 45° zur Senkrechten auf der Platine gekippt ist, und bei welchem in den Signalverarbeitungsmitteln unter Annahme vorgegebener Objekthypothesen aus den Werten und bzw. oder den zeitlichen Verläufen von wenigstens einer Messgröße die Winkellage von Objekten in zur Platine senkrechter Richtung geschätzt wird.

9. Radarsensor nach einem der obigen Ansprüche, bei welchem es jeweils wenigstens eine Empfangsantenne gibt, deren Strahlkegelzentrum außerhalb des Sensors um höchstens 45° bzw. um mehr als 45° zur Senkrechten auf der Platine gekippt ist, wobei die Erfassungsbereiche der Empfangsantennen überlappen und im Überlappbereich durch Amplitudenvergleich und bzw. oder Phasenvergleich von Signalen bzw. Größen, welche aus den Empfangssignalen solcher Antennen abgeleitetet sind oder diesen entsprechen, eine Winkelschätzung für Objekte durchgeführt wird und bzw. oder Mehrdeutigkeiten in der Winkelschätzung vermieden werden.

10. Radarsensor nach einem der obigen Ansprüche, welcher bezüglich dem Radarsensor selber frontal, frontaler Erfassungsbereich, also entgegen seiner Montagefläche im Kraftahrzeug, und seitlich, seitlicher Erfassungsbereich, schaut.

11. Radarsensor nach Anspruch 12, bei welchem sich zum einen der frontale und der seitliche Erfassungsbereich berühren oder überlappen, und es zum anderen für den frontalen Erfassungsbereich mehrere Sende- und bzw. oder mehrere Empfangsantennen gibt, wodurch in diesem frontalen Erfassungsbereich der Azimutwinkel von Objekten unmittelbar bestimmt werden kann.

12. Radarsensor nach Anspruch 10 oder 11, bei welchem durch auf der Platinenvorderseite angeordnete, in gedruckter Struktur ausgebildete Elementarstrahler wenigstens eine Sende- und eine Empfangsantenne mit frontalem Erfassungsbereich und durch am Rand der Platinenrückseite angeordnete, in gedruckter Struktur ausgebildete Elementarstrahler mit Umlenkung an einer metallischen oder metallisierten ebenen oder gewölbten Fläche wenigstens eine Sende- und eine Empfangsantenne mit seitlichem Erfassungsbereich realisiert werden, wobei diese metallische oder metallisierte ebene oder gewölbte Fläche als Teil eines konstruktiven Innenelements realisiert ist.

13. Radarsensor nach einem der obigen Ansprüche, welcher für die Realisierung eines Spurwechselassistenten bezüglich des Fahrzeuges nach hinten und zur Seite schaut.

## Claims

1. A radar sensor for recording the environment of a motor vehicle, comprising:
- transmission means for emitting transmission signals using several transmitter antennae,
- receiving means for receiving transmission signals reflected by objects using several receiver antennae; and
- signal processing means for processing the received signals, wherein it is equipped with several transmitter antennae and several receiver antennae, each containing at least one individual transmitting or receiving element, referred to henceforth as an elemental emitter, which is located on the front or back of a level printed circuit board (1.3),
- it is equipped with at least one transmitter antenna and one receiver antenna, each containing at least one elemental emitter located on the level printed circuit board (1.3), the beam cone centre of which elemental emitter is tilted outside the radar sensor at a maximum of 45° to the perpendicular on the printed circuit board (1.3),
- it is equipped with at least one transmitter antenna and one receiver antenna, each containing at least one elemental emitter located on the level printed circuit board (1.3), the beam cone centre of which elemental emitter is tilted outside the radar sensor at more than 45° to the perpendicular on the printed circuit board (1.3),
**characterized in that** a tilting of the beam cone centre of one or more elemental emitters outside the radar sensor by more than 45° to the perpendicular on the printed circuit board is realised **in that** elemental emitters are used in a printed structure, the beam cone centre of which without additional means is at least approximately perpendicular to the printed circuit board (1.3) and which are therefore referred to henceforth as frontal elemental emitters, and in order to tilt the beam cone centre of these frontal elemental emitters which are preferably located close to the edge of the printed circuit board (1.3)
and, consequently, to realise laterally radiating elemental emitters, at least one of the following measures is used:
- deflection of the beam path of the elemental emitters with reflecting, in particular metal or metallised level or curved faces, by means of the elemental emitters, wherein the faces are designed as part of an inner support (1.4) or a housing (1.1),
- deflection of the beam path of the elemental emitters with waveguide structures,
- deflection of the beam path of the elemental emitters with suitably formed structures made of a dielectric material, in particular by means of the elemental emitters and wherein the dielectric material is part of a plastic housing (1.1).

2. The radar sensor according to Claim 1, having at least one elemental emitter, the beam cone centre of which lies outside the radar sensor at least approximately parallel or approximately perpendicular to the printed circuit board.

3. The radar sensor according to any one of the above claims, in which the elemental emitters are configured as a printed structure, in particular as patches.

4. The radar sensor according to any one of the above claims, in which at least one antenna is used both for transmitting and for receiving.

5. The radar sensor according to any one of the above claims, in which a tilting of the beam cone centre of one or more elemental emitters outside the radar sensor by more than 45°, in particular at least approximately 90° to the perpendicular on the printed circuit board, is additionally realised in that elemental emitters are used in a printed structure, the beam cone centre of which is located without additional means laterally to the printed circuit board and which are referred to henceforth as lateral elemental emitters, wherein these lateral elemental emitters are preferably located at the edge of the printed circuit board and are preferably realised as slit-shaped emitters.

6. The radar sensor according to any one of the above claims, in which it is equipped with at least two transmitter antennae and/or two receiver antennae, the beam cone centres of which are tilted outside the sensor by more than 45° to the perpendicular on the printed circuit board and the phase centres of which are each offset with respect to one another when viewed in a perpendicular direction to the printed circuit board, wherein the angular position of objects in the direction perpendicular to the printed circuit board is estimated in the signal processing means with the aid of the phasings of the received signals from different combinations of transmitter and receiving antennae, for which at least two such transmitter and/or two such receiver antennae are used with offset phase centres.

7. The radar sensor according to Claim 6,
in which the offset of the phase centres in the direction perpendicular to the printed circuit board is realised by at least one of the following measures:
- at least one deflected frontal elemental emitter according to Claim 1 or lateral elemental emitter according to Claim 5 is provided on both sides of the printed circuit board,
- at least one lateral elemental emitter according to Claim 5 is provided on one side of the printed circuit board, in particular the front,
and at least one deflected frontal elemental emitter is provided on the other side of the printed circuit board,
- both at least one lateral elemental emitter according to Claim 5,
- and at least one deflected frontal elemental emitter, the phase centre of which is located above or below the printed circuit board, are provided on only one side of the printed circuit board,
- at least one deflected frontal elemental emitter is provided on only one side of the printed circuit board, in particular the rear, wherein the deflection is designed for example with the aid of waveguides or different reflecting faces so that different phase centres are produced in the direction perpendicular to the printed circuit board.

8. The radar sensor according to any one of the above claims, in particular in which only one transmitter antenna and one receiver antenna are provided, the beam cone centre of which is tilted outside the sensor by more than 45° to the perpendicular on the printed circuit board, and in which the angular position of objects in the direction perpendicular to the printed circuit board is estimated in the signal processing means, assuming predefined object hypotheses from the values and/or the temporal courses of at least one measuring variable.

9. The radar sensor according to any one of the above claims, in which at least one receiver antenna is provided in each case, the beam cone centre of which is tilted outside the sensor by a maximum of 45° or by more than 45° to the perpendicular on the printed circuit board, wherein the recording regions of the receiver antennae overlap and an angle estimation is carried out for objects and/or ambiguities in the angle estimation are avoided in the overlapping region by comparing amplitudes and/or comparing phases of signals or variables which are derived from the received signals of such antennae or correspond thereto.

10. The radar sensor according to any one of the above claims, which looks frontally with respect to the radar sensor itself - the frontal recording region - that is to say in the direction opposite its installation area in the motor vehicle, and laterally - the lateral recording region.

11. The radar sensor according to Claim 12, in which, on the one hand, the frontal and the lateral recording regions touch or overlap, and, on the other hand, several transmitter antennae and/or several receiver antennae are provided for the frontal recording region, as a result of which the azimuth angle of objects can be directly determined in this frontal recording range.

12. The radar sensor according to Claim 10 or 11, in which at least one transmitter antenna and one receiver antenna having a frontal recording range is realised by elemental emitters located on the front side of the printed circuit board and configured in a printed structure, and at least one transmitter antenna and one receiver antenna having a lateral recording range is realised by elemental emitters located at the edge of the back of the printed circuit board and configured in a printed structure with deflection from a metal or metallised level or curved face, wherein said metal or metallised level or curved face is realised as part of a constructive inner element.

13. The radar sensor according to any one of the above claims, which looks backwards and to the side with respect to the vehicle in order to realise a lane change assistant.

## Revendications

1. Capteur radar pour la détection de l'environnement d'un véhicule à moteur, avec
- des moyens d'émission pour la diffusion de signaux d'émission avec plusieurs antennes d'émission,
- des moyens de réception pour la réception de signaux d'émission réfléchis sur des objets avec plusieurs antennes de réception, et
- des moyens de traitement du signal pour le traitement des signaux reçus, plusieurs antennes d'émission et plusieurs antennes de réception existant, lesquelles comprennent au moins un élément individuel émettant ou recevant disposé sur le côté avant ou arrière d'une platine plane (1.3), ci-après désigné comme élément rayonnant élémentaire,
- au moins une antenne d'émission et une antenne de réception existant, lesquelles comprennent respectivement au moins un élément rayonnant élémentaire disposé sur la platine plane (1.3), dont le centre de cône de rayonnement est incliné de 45° au maximum par rapport à la verticale de la platine (1.3), hors du capteur radar,
- au moins une antenne d'émission et une antenne de réception existant, lesquelles comprennent respectivement au moins un élément rayonnant élémentaire disposé sur la platine plane (1.3), dont le centre de cône de rayonnement est incliné de plus de 45° par rapport à la verticale de la platine (1.3), hors du capteur radar,
**caractérisé en ce qu'**une inclinaison du centre de cône de rayonnement d'un ou plusieurs éléments rayonnants élémentaires hors du capteur radar de plus de 45° par rapport à la verticale de la platine est réalisée par le fait que des éléments rayonnants élémentaires sont utilisés en structure imprimée, dont le centre de cône de rayonnement est vertical par rapport à la platine (1.3) au moins approximativement, sans moyens supplémentaires, et lesquels sont par conséquent désignés comme éléments rayonnants élémentaires frontaux dans la suite, et **en ce qu'**au moins une des mesures suivantes est utilisée pour l'inclinaison du centre de cône de rayonnement de ces éléments rayonnants élémentaires frontaux disposés de préférence à proximité du bord de la platine (1.3), et par suite pour la réalisation d'éléments rayonnants élémentaires diffusant de façon latérale :
- déviation du chemin optique des éléments rayonnants élémentaires avec des surfaces planes ou courbes, réfléchissantes, en particulier métalliques ou métallisées, au-dessus des éléments rayonnants élémentaires, les surfaces étant formées comme partie d'un support intérieur (1.4) ou d'un boîtier (1.1)
- déviation du chemin optique des éléments rayonnants élémentaires avec des structures de guide d'ondes,
- déviation du chemin optique des éléments rayonnants élémentaires avec des structures formées de façon appropriée en matériau diélectrique, en particulier au-dessus des éléments rayonnants élémentaires, et le matériau diélectrique faisant partie d'un boîtier en plastique (1.1).

2. Capteur radar selon la revendication 1, avec au moins un élément rayonnant élémentaire dont le centre de cône de rayonnement est disposé au moins approximativement parallèlement ou approximativement verticalement par rapport à la platine, hors du capteur radar.

3. Capteur radar selon l'une des revendications précédentes, sur lequel les éléments rayonnants élémentaires sont formés comme structure imprimée, en particulier comme des patchs.

4. Capteur radar selon l'une des revendications précédentes, sur lequel au moins une antenne est utilisée aussi bien pour l'émission que pour la réception.

5. Capteur radar selon l'une des revendications précédentes, sur lequel, de plus, une inclinaison du centre de cône de rayonnement d'un ou plusieurs éléments rayonnants élémentaires de plus de 45°, en particulier au moins d'approximativement 90°, par rapport à la verticale de la platine, hors du capteur radar, est réalisée par le fait que des éléments rayonnants élémentaires sont utilisés en structure imprimée, dont le centre de cône de rayonnement est disposé, au moins approximativement, latéralement par rapport à la platine sans moyens supplémentaires, et lesquels sont par conséquent désignés comme éléments rayonnants élémentaires latéraux dans la suite, ces éléments rayonnants élémentaires latéraux étant disposés de préférence au bord de la platine et réalisés de préférence comme des éléments rayonnants à fente.

6. Capteur radar selon l'une des revendications précédentes, sur lequel au moins deux antennes d'émission et/ou deux antennes de réception existent, dont les centres de cône de rayonnement sont inclinés de plus de 45° par rapport à la verticale sur la platine, hors du capteur, et dont les centres de phase dans la direction verticale vue par rapport à la platine sont respectivement décalés les uns par rapport aux autres, la position angulaire d'objets dans la direction verticale par rapport à la platine étant évaluée à l'aide de positions de phase des signaux de réception de combinaisons différentes d'antennes d'émission et de réception, pour lesquelles au moins deux antennes d'émission semblables et/ou deux antennes de réception semblables, sont utilisées, avec centres de phase décalés.

7. Capteur radar selon la revendication 6,
sur lequel le décalage des centres de phase dans la direction verticale par rapport à la platine est réalisé par au moins une des mesures suivantes :
- il existe au moins un élément rayonnant élémentaire frontal dévié selon la revendication 1 ou au moins un élément rayonnant élémentaire latéral selon la revendication 5 sur les deux côtés de la platine,
- il existe au moins un élément rayonnant élémentaire latéral selon la revendication 5 sur un côté de la platine, en particulier le côté avant,
et sur l'autre côté de la platine, au moins un élément rayonnant élémentaire frontal dévié,
- il existe aussi bien au moins un élément rayonnant élémentaire latéral selon la revendication 5 sur un seul côté de la platine,
qu'au moins un élément rayonnant élémentaire frontal dévié dont le centre de phase se trouve au-dessus ou au-dessous de la platine,
- sur un seul côté de la platine, en particulier le côté arrière, il existe au moins un élément rayonnant élémentaire frontal dévié, la déviation étant conçue à l'aide de guides d'ondes ou de surfaces réfléchissantes différentes, par exemple, de telle sorte que des centres de phase différents sont générés en direction verticale par rapport à la platine.

8. Capteur radar selon l'une des revendications précédentes, en particulier sur lequel il existe seulement une antenne d'émission et une antenne de réception, dont le centre de cône de rayonnement est incliné de plus de 45° par rapport à la verticale sur la platine, hors du capteur, et sur lequel la position angulaire d'objets en direction verticale par rapport à la platine est évaluée dans les moyens de traitement du signal, sur la base d'hypothèses d'objets spécifiées à partir des valeurs et/ou des déroulements temporels d'au moins une grandeur de mesure.

9. Capteur radar selon l'une des revendications précédentes, sur lequel il existe respectivement au moins une antenne de réception, dont le centre de cône de rayonnement est incliné de 45° au maximum ou de plus de 45° par rapport à la verticale sur la platine, hors du capteur, les plages de détection des antennes de réception se chevauchant et une estimation angulaire étant effectuée pour des objets et/ou des ambiguïtés dans l'estimation angulaire étant évitées, dans la plage de chevauchement, par comparaison d'amplitudes et/ou comparaison de phases de signaux ou de grandeurs, lesquelles sont dérivées des signaux de réception de semblables antennes ou correspondent à ceux-ci.

10. Capteur radar selon l'une des revendications précédentes, lequel est orienté vers l'avant, plage de détection frontale, c'est-à-dire à l'opposé de sa surface de montage dans le véhicule, et latéralement, plage de détection latérale, par rapport au capteur radar lui-même

11. Capteur radar selon la revendication 12, sur lequel, d'une part, la plage de détection frontale et la plage de détection latérale se touchent ou se chevauchent, et, d'autre part, sur lequel il existe plusieurs antennes d'émission et/ou plusieurs antennes de réception pour la plage de détection frontale, l'angle azimutal d'objets pouvant être directement déterminé dans cette plage de détection frontale, de ce fait.

12. Capteur radar selon la revendication 10 ou 11, sur lequel au moins une antenne d'émission et une antenne de réception avec plage de détection frontale sont réalisées par des éléments rayonnants élémentaires formés en structure imprimée, disposés sur le côté avant de la platine, et au moins une antenne d'émission et une antenne de réception avec plage de détection latérale sont réalisées par des éléments rayonnants élémentaires formés en structure imprimée, disposés sur le bord du côté arrière de la platine, avec déviation au niveau d'une surface métallique ou métallisée, plane ou courbe, cette surface métallique ou métallisée, plane ou courbe étant réalisée comme partie d'un élément intérieur de construction.

13. Capteur radar selon l'une des revendications précédentes, lequel est orienté vers l'arrière et vers le côté relativement au véhicule, pour la réalisation d'un assistant de changement de voie.
